# EUROPEAN PATENT APPLICATION

(11) **EP 2 437 349 A1**
(43) Date of publication of application: **04.04.2012**
(21) Application number: 11181185.7
(22) Date of filing: 14.09.2011
(51) Int. Cl.: H01Q 1/52, H01Q 1/22

(54) **Display device**

(30) Priority: 29.09.2010 JP 2010219746
(71) Applicant: Tyco Electronics Japan G.K., Takatsu-ku Kawasaki-shi Kanagawa 213-8535 (JP)
(72) Inventor: Usui, Hideyuki, Kawasaki Kanagawa 213-8535 (JP); Nozue, Daisuke, Kawasaki Kanagawa 213-8535 (JP)
(74) Representative: Johnstone, Douglas Ian

(57) **Abstract**

A display device (1) includes a flat-panel display portion (10) on an upper surface (10a) of which a linearly extending metal plate (11) and an antenna device (20) for a wireless LAN are provided. The antenna device (20) comprises multiple antennas (20A,20B) arranged side-by-side on a common straight line and are arranged parallel to the metal plate (11) such that a predetermined distance between them is minimised. An aperture (12A,12B) is formed in the metal plate (11) at a position corresponding to each antenna (20A, 20B). The multiple antennas (20A, 20B) are able to radiate radio waves over a large distance, without being affected by the metal plate (11) or by a metal body disposed around the display device (1).

## Description

The present invention relates to a display device equipped with an antenna device comprising multiple antennas for a wireless LAN.

In recent years, there has been an increasing demand for equipment that use wireless Local Area Networks (LANs). Such equipment, includes flat TV sets with display devices, Personal Computers (PCs), and notebook PCs. High-speed data communication technology that speeds up communication in a wireless LAN up to several times includes a technology called Multiple Input Multiple Output (MIMO)technology which has been adopted as wireless LAN standard "IEEE 802. 11n". MIMO is a wireless communication technology in which multiple antennas are combined to expand a bandwidth for data communication. The antennas simultaneously transmit different data and the data is synthesized upon reception, thus artificially implementing broadband for high speed communication.

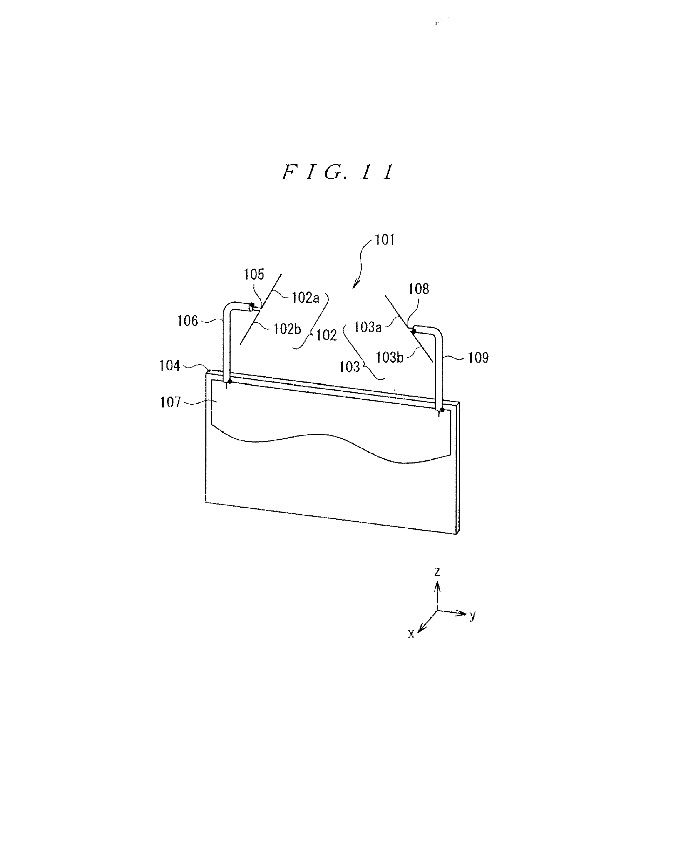

For the aforementioned display device to use MIMO technology it is necessary, for example, to install multiple antennas in a flat-panel display portion of the display device. The flat-panel display portion is configured to have a substantially rectangular shape. For example, it is common to provide a metal plate on upper and lower surfaces and on both sides thereof, to improve a mechanical strength of the flat-panel display portion. Patent JP 2010-004318A discloses an example of applying the MIMO technology. It discloses an antenna device (for example, one shown in FIG. 11) which maintains isolation between antennas of two items of radio equipment in a communication device equipped with the two items of radio equipment where near-by or close frequency bandwidths are used.

An antenna device 101 shown in FIG. 11 includes a first dipole antenna 102 and a second dipole antenna 103 disposed at different sides of an upper edge of a substrate 104. The first dipole antenna 102 is composed of radiation elements 102a, 102b symmetrically disposed with respect to a feeding point 105 at a center of the antenna. The feeding point 105 is connected through a coaxial cable 106 to a radio circuit (not shown) mounted on the substrate. An external conductor of the coaxial cable 106 is connected to ground patterns 107 formed on the substrate.

The second dipole antenna 103 is composed of radiation elements 103a,103b symmetrically disposed with respect to a feeding point 108 at a center of the antenna. The feeding point 108 is connected through a coaxial cable 109 to a radio circuit (not shown) mounted on the substrate. An external conductor of a coaxial cable 109 is connected to the ground pattern 107 formed on the substrate 104.

The radiation elements 102a, 102b of the first dipole antenna 102 and the radiation elements 103a, 103b of the second dipole antenna 103 are disposed orthogonally in relation to each other in an XZ plane. Further, the radiation elements 102a, 102b of the first dipole antenna 102 are disposed, inclined, at an angle (45° in the example shown Fig FIG. 11) larger than 0° and smaller than 90°, from a Z-axis direction towards an X-axis direction in the XZ plane.

In the antenna equipment 101, since the radiation elements 102a,102b and the radiation elements 103a,103b are disposed orthogonally in relation to each other in the XZ plane, polarized waves radiated from the two dipole antennas 102, 103 will cross each other at right angles. Although the two dipole antennas 102,103 are oppositely disposed in contiguity with each other, coupling caused by theses radiation waves can be decreased, thereby providing large isolation.

It should be noted that the conventional antenna device 101 shown in FIG. 11 was not developed for use in display devices. If the conventional antenna device 101 shown in FIG. 11 is mounted, for example, on either surface of the flat-display panel portion on which the metal plate is provided on the upper and lower surfaces and both sides, radio waves radiated from the radiation elements 102a, 102b and the radiation elements 103a, 103b may be affected by the metal plate. The object of the present invention is to provide a display device with an antenna device for a wireless LAN, comprising multiple antennas, which are capable of radiating radio waves to a remote location, without being affected by a metal plate provided in the flat-panel display portion or metal body disposed around, the display device.

To achieve the above object, a display device according to claim 1 comprises: a flat-panel display portion on upper surface of which a linearly extending metal plate is provided; and an antenna device for a wireless LAN arranged on the upper surface of the flat-panel display portion, wherein the antenna equipment comprises multiple antennas arranged side-by-side on the straight line and arranged in parallel with the metal plate, the multiple antennas being arranged so that preferably a predetermined distance between adjacent said antennas becomes the shortest, and wherein plural apertures are formed at a position corresponding to each antenna of the metal plate. Here, the "predetermined distance" is a distance between the adjacent antennas where a ratio (voltage standing wave ratio: VSWR) of a predetermined voltage at an output side to that of an input side is below -20 dB, when a high frequency signal having a predetermined voltage is input from one antenna and the predetermined voltage is derived thereby from the other antenna.

Further, in the display device according to claim 2, depending on claim 1, each of the multiple antennas comprises a tab-like ground plate and a tab-like radiation element rising up or extending from an edge of the ground plate, wherein each of the multiple antennas is arranged so that its radiation element faces towards one said aperture formed in the metal plate. Moreover, in the display device according to claim 3, depending on claim 2, wherein the radiation elements of the multiple antennas and the metal plate are arranged on said straight line.

According to the display device, since the antenna device for the wireless LAN is arranged on the upper surface of the flat-panel display portion, the antenna equipment is able to radiate the radio waves to a distant or far away location, without being affected by the metal body disposed around the display device. In a case where the antenna device for the wires LAN is arranged on a lower surface of the flat-panel display portion, when the metal body is used in a pedestal on which the flat-panel display portion is mounted, the antenna device is susceptible to be influenced by the metal body. Moreover, in a case where the antenna device for the wireless LAN is arranged on the both sides of the flat-panel display portion, when the display device is disposed in the vicinity of a wall on which the metal body is provided, the antenna device is susceptible to be influenced by the metal body. In contrast, when the antenna device for the wireless LAN is arranged on the upper surface of the flat-panel display portion, such shortcomings will not occur.

The antenna device comprises multiple antennas arranged side-by-side on the same straight line and arranged parallel with a linearly extending metal plate provided on the upper surface of the flat-panel display. The plural apertures are formed at positions, corresponding to each antenna of the metal plate. Therefore, radio waves radiated from each of the multiple antennas are radiated through respective apertures formed in the metal plate provided on the upper surface of the flat-panel display portion. This radiates the radio waves to a distant or far away location, without being affected by the metal plate provided in the flat-panel display portion. Moreover, the provision of the metal plate on the upper surface of the flat-panel display portion contributes to maintaining the mechanical strength of the flat-panel display portion. Furthermore, since the multiple antennas are arranged so that the antennas are spaced away from each other by a predetermined distance between the antennas adjacent to one another, coupling arising from radio waves radiated from each antenna may be attenuated. This maintains high isolation, thus allowing communication without suffering from degradation of the signal from each antenna.

The invention will now be described by way of example only with reference to the accompanying drawings in which:
FIG. 1 is a plan view of a display device according to the present invention, in which a cover to be provided around a flat-panel display portion has been omitted, and shading is drawn on an upper surface of a metal plate, for easy identification of the upper surface;
FIG. 2 is a front view of the display device shown in FIG. 1, in which the cover to be provided around the flat-panel display portion has been omitted;
FIG. 3 is a left side view of the display device shown in FIG. 1, in which the cover to be provided around the flat-panel display portion has been omitted;
FIG. 4 is a rear oblique perspective view from above of the antenna device used for the display device shown in FIG. 1;
FIG. 5 shows the antenna device shown in FIG. 4, in which FIG. 5A is a plan view, and FIG. 5B is a front view;
FIG. 6 shows the antenna device shown in FIG. 4, in which FIG. 6A is a right side view, FIG. 6B is a left side view, and FIG. 6C is a back view;
FIG. 7 is a plan view schematically showing the trial display device, in which a pair of antennas is arranged on both sides of an upper surface of the flat-panel display portion;
FIG. 8 is a graph showing measurement results of transmission performance of a high frequency signal obtained by a network analyzer between the antennas adjacent to each other in the trial display device shown in FIG. 7;
FIG. 9 is an explanatory diagram schematically showing a positional relation between a pair of antennas arranged on both sides of the upper surface of the flat-panel display portion and a wireless LAN module provided inside the display device;

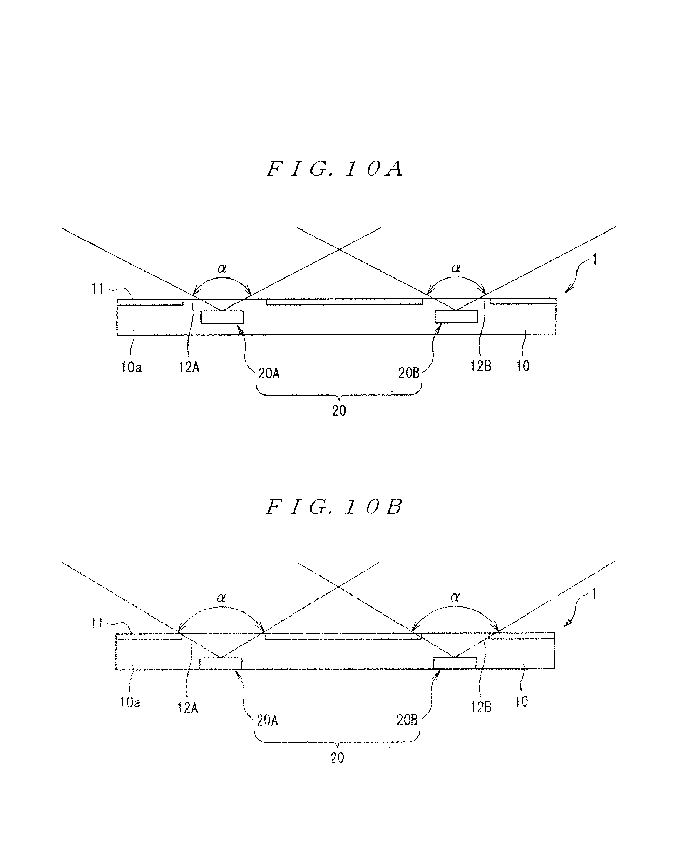

FIG. 10 shows situations in which radio waves radiated from each of a pair of the antennas arranged on the both sides of an upper surface of the flat-panel display portion pass through an aperture formed in the metal plate, in which FIG. 10A is a plan view schematically showing a situation in which radio waves radiated from the antenna pass through an aperture formed in the metal plate in a case where each antenna is arranged at a center in a depth direction of the flat-panel display portion spaced from the aperture formed in the metal plate, and FIG. 10B is a plan view schematically showing a situation in which radio waves radiated from each antenna pass through an aperture formed in the metal plate in a case where each antenna is arranged on a first or rear edge, of the flat-panel display portion and the metal plate with the apertures is arranged on an opposite second or front edge thereof; and
FIG. 11 is a perspective view of a conventional antenna device.

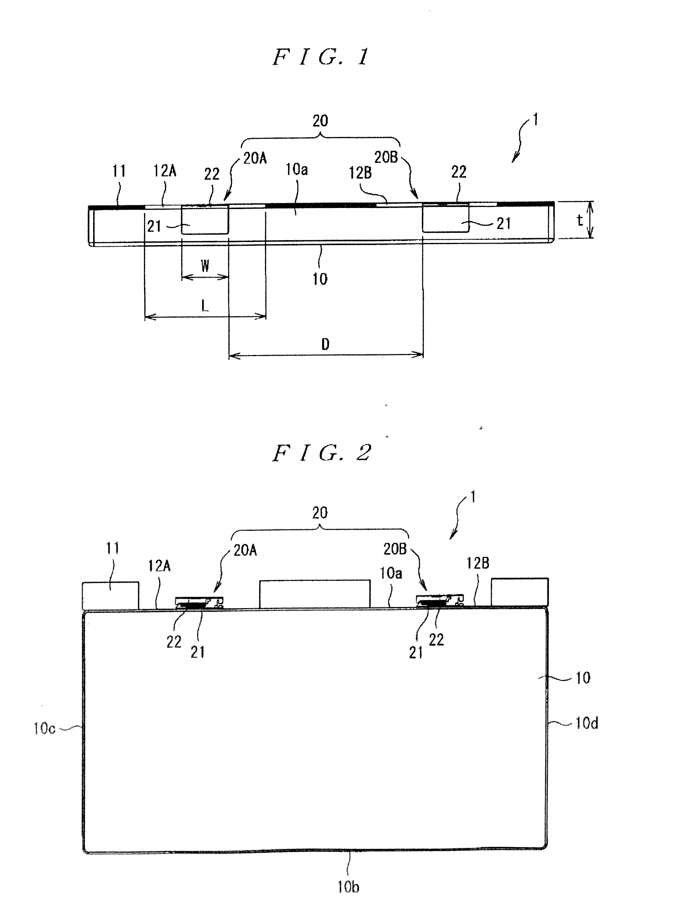

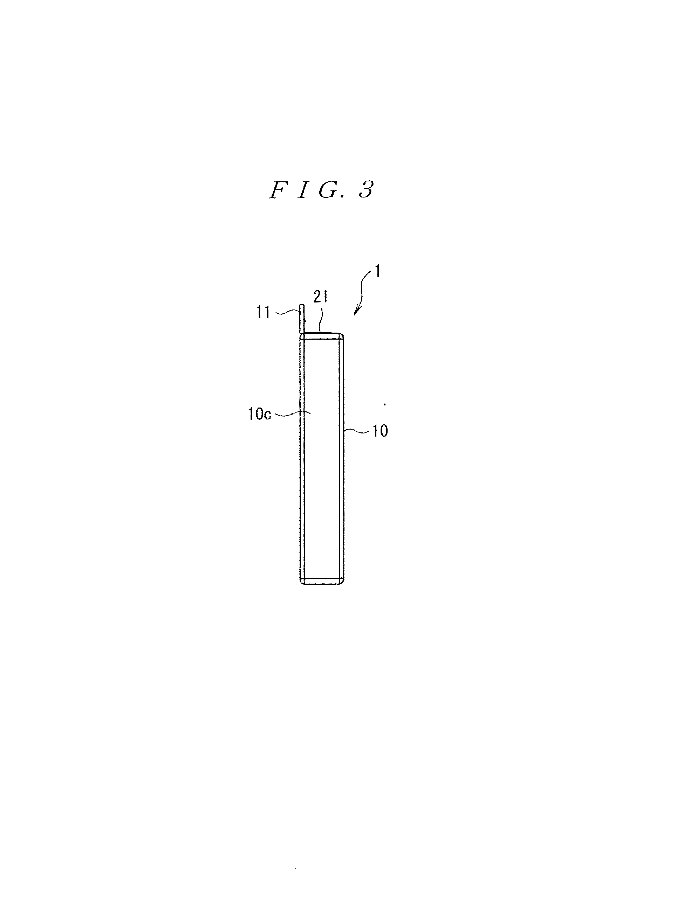

A display device 1 shown in FIG. 1 to FIG. 3 is applied to a flat TV set and is useable with a Multiple Input and Multiple Output (MIMO)system which complies with wireless LAN standard "IEEE 802. 11n". The display device 1 comprises a flat-panel display portion 10 and an antenna device 20 for a wireless LAN.

The flat-panel display portion 10 is formed in a substantially rectangular shape, having thickness t in a depth direction (upper and lower direction in FIG. 1), with an upper surface 10a, a lower surface 10b, and left and right sides 10c and 10d. At a front end edge (upper end edge in FIG. 1)in the depth direction of the upper surface 10a of the flat-panel display portion 10, a linearly extending metal plate 11 is provided along the front end edge. The metal plate 11, has portions which protrude upwardly from the upper surface 10a of the flat-panel display portion 10 and is made from a flat rectangular panel. The metal panel 11 includes plural (two in the instant embodiment) apertures 12A, 12B each formed at a position corresponding to one antenna 20A, 20B as discussed in detail later.

The antenna device 20 comprises multiple (two in the instant embodiment) antennas 20A, 20B. As shown in FIG. 1, the multiple antennas 20A, 20B are arranged side by side on the same straight line and are arranged parallel to the metal plate 11. The multiple antennas 20A, 20B are arranged so as to be spaced apart from each other by a predetermined distance D between the adjacent antennas 20A, 20B.

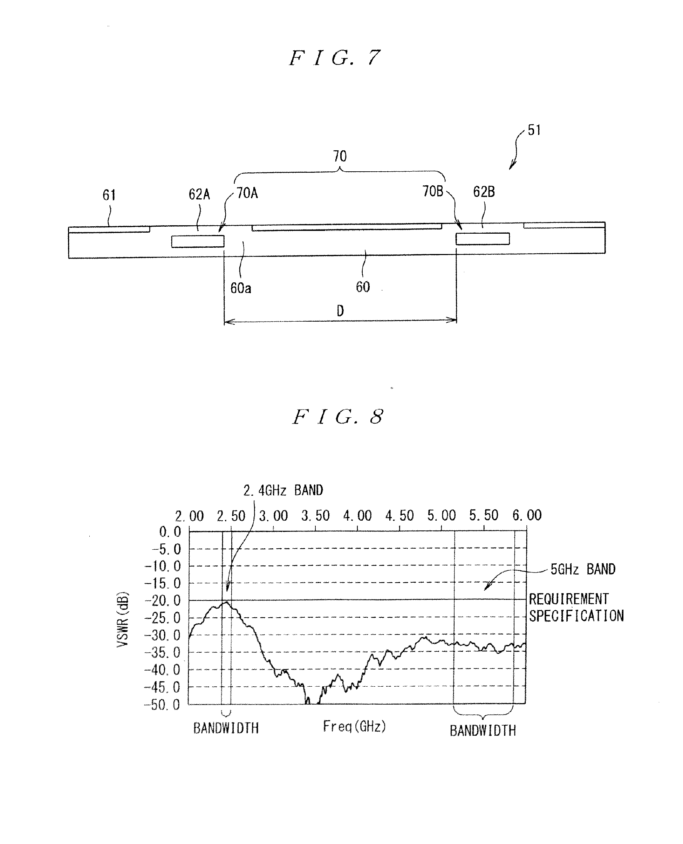

The predetermined distance D is a distance between the adjacent antennas, where a ratio (voltage standing wave ratio: VSWR) of a predetermined voltage at an output side to a predetermined voltage at an input side, is below -20 dB, when a high frequency signal having a predetermined voltage is input from one antenna and the predetermined Voltage is derived thereby from the other antenna. To verify the predetermined distance D, a transmission performance of the high frequency signal between the adjoined antennas is measured in a trial display device shown in FIG. 7 using the network analyzer.

The trial display device 51 shown in FIG. 7 includes an antenna device 70 for a wireless LAN on an upper surface 60a of a flat-panel display portion 60. At the front end edge (upper end edge in FIG. 7) in the depth direction of the upper surface 60a of the flat-panel display portion 60, a linearly extending metal plate 61 is provided along the front end edge. The antenna device 70 comprises a pair of antennas 70A, 70B aligned on a straight line parallel with the metal plate 61. Spacing between the pair of the antennas 70A, 70B is set to a predetermined distance D of which length is determined to be approximately 120mm. At a position corresponding to each antenna 70A, 70B on the metal plate 61, an aperture 62A, 62B is formed. The pair of antennas 70A, 70B are arranged at the center in the depth direction of the upper surface 60a of the flat-panel display portion 60 spaced from the metal plate 61.

In the trial display device 51 shown in FIG.7, a network analyzer (not shown) is utilized to input a high frequency signal (ranging from about 2.00 GHz to 6.00 GHz) having a predetermined voltage from one of the pair of the antennas 70A,70B. At the same time, the predetermined voltage is derived from the other adjacent antenna (s) 70A, 70B and a ratio (voltage standing wave ratio: VSWR) of the predetermined Voltage at the output side to that at the input side is measured. The Results thus obtained are shown in FIG. 8.

As shown in FIG. 8, where the predetermined distance D between the pair of the antennas 70A, 70B is approximately 120mm, it can be seen that the ratio (voltage standing wave ratio: VSWR) of the predetermined Voltage at the output side to that at the input side is -20dB (which is a specification requirement), even for high frequency signals of both 2.4 GHz band and 5 GHz band used for wireless LANs. Gradually increasing the predetermined distance D between the pair of the antennas 70A,70B to more than 120mm causes the voltage standing wave ratio (VSWR) to drop proportionately to the distance. In the present invention, the antennas 70A, 70B are arranged such that the predetermined distance D becomes the shortest.

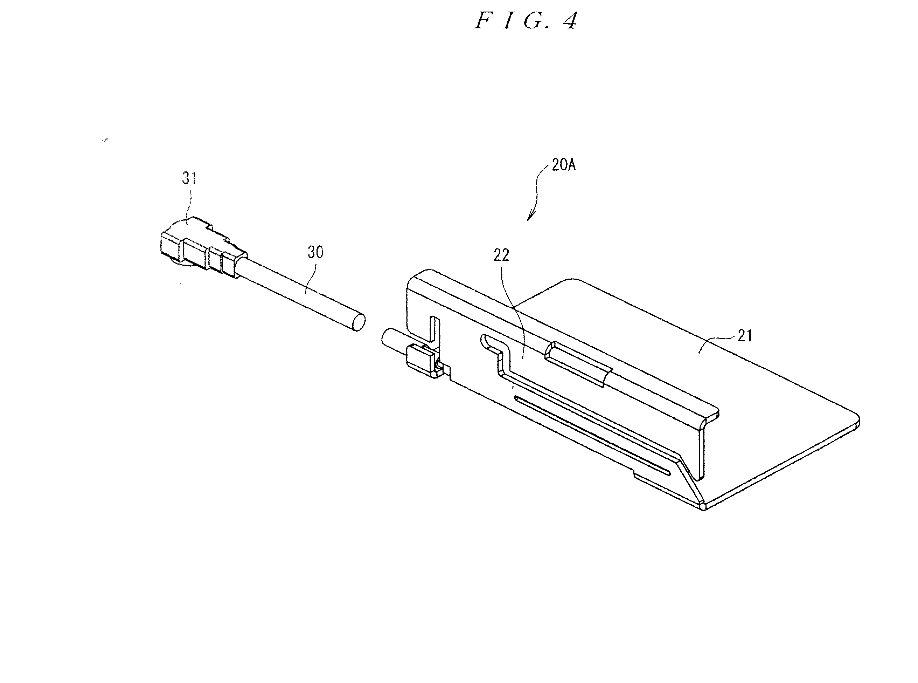

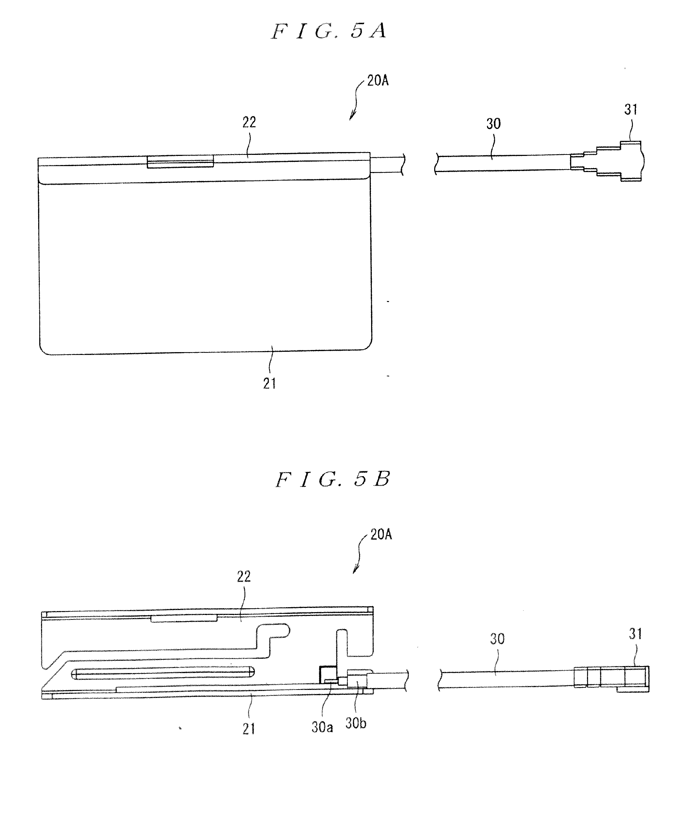

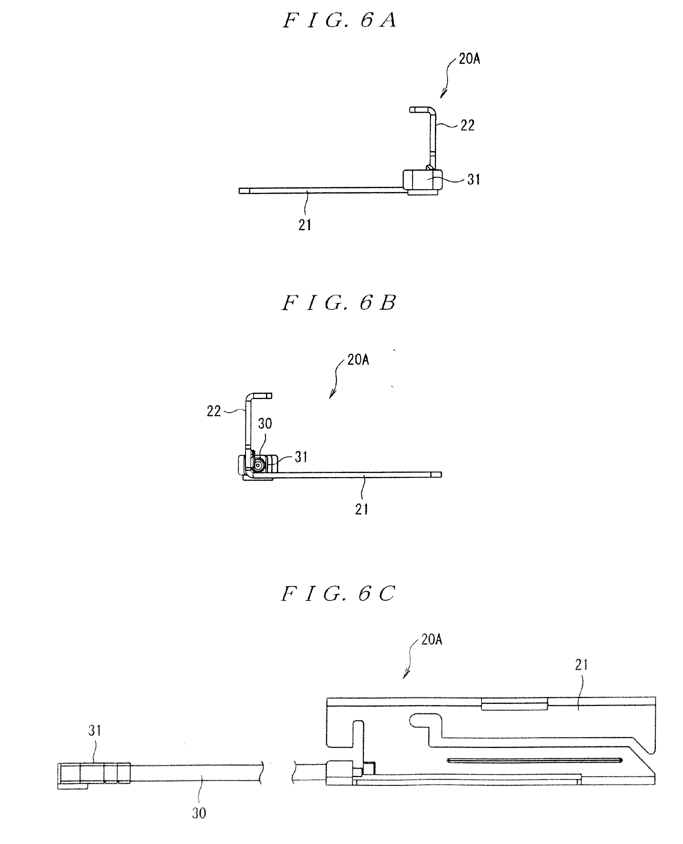

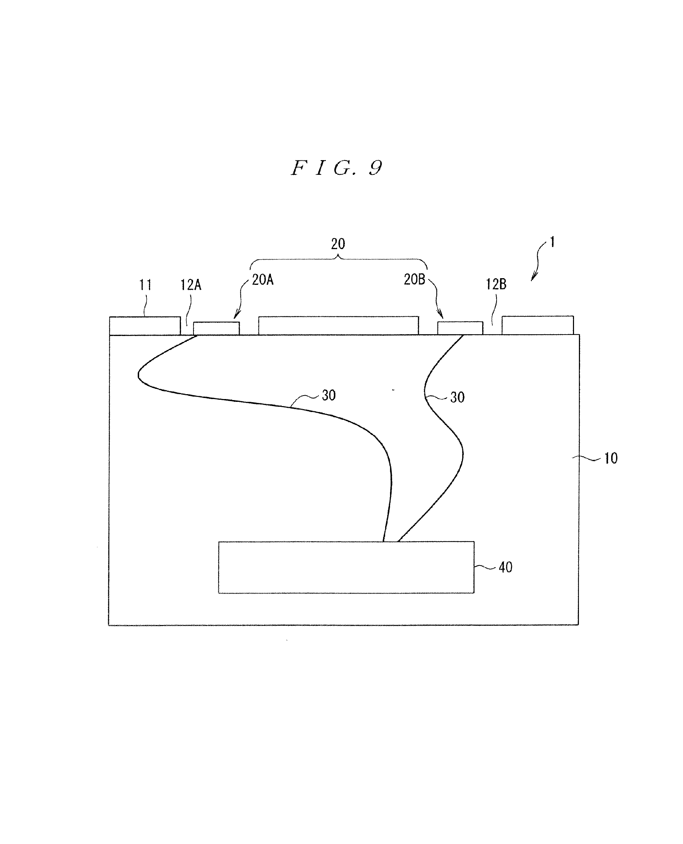

A description will now be provided of the antenna 20A only, as the multiple antennas 20A, 20B have identical configurations. The antenna 20A is a so-called inverted F antenna, and comprises, as shown in FIG. 4 to FIG. 6, a rectangular and tab-like ground plate 21 and a tab-like radiation element 22 rising or extending up from one side edge of the ground plate 21. The antenna 20A is made by stamping and forming a metal plate. As best shown in FIG. 5B, a core wire 30a of a coaxial cable 30 is soldered to the radiation elements 22, and a braid 30b is soldered to the ground plate 21. As shown in Fig. 9, the coaxial cable 30 is connected to a wireless LAN module 40 to control MIMO communication.

As shown in FIG. 1, the multiple antennas 20A, 20B are arranged on the upper surface 10a of the flat-panel display portion 10 so that the radiation elements 22 face the apertures 12A, 12B formed in the metal plate 11, and are arranged on the same straight line with the metal plate 11. That is, the multiple antennas 20A, 20B are arranged so that each radiation element 22 is positioned inside one of the apertures 12A,12B formed in the metal plate 11, and is positioned along the front end edge, in the depth direction, of the upper surface 10a of the flat-panel display portion 10.

In the instant embodiment, the width L of each aperture 12A, 12B is approximately 65 mm, the width W of each antenna 20A, 20B is approximately 25 mm, and a distance of both sides of the antenna 20A, 20B is set to be approximately 20 mm. As shown in FIG. 1, where the radiation elements 22 of each antenna 20A, 20B are arranged on the same straight line with the metal plate 11, the width L of each aperture 12A, 12B has to be approximately 65 mm, when the width W of each antenna 20A, 20B is approximately 25mm. A cover member (not shown) covers around the flat-panel display portion 10 and the antenna device 20 for the wireless LAN.

With the display device 1, having such a configuration, when sending the MIMO, a high frequency radio wave having either 2.4 GHz band or 5 GHz band is radiated from the both antennas 20A, 20B. More specifically, the high frequency radio wave having either 2.4 GHz band or 5 GHz band is radiated from the radiation elements 22 of both antennas 20A, 20B, towards an access point (not shown) positioned at the forward side (upper side in FIG. 1) of the display device, at a radiation angle of α (see FIG. 10A and FIG. 10B). Further, when receiving the MIMO, the high frequency radio wave having either 2.4 GHz band or 5 GHz band radiated from the access point is received by the both antennas 20A, 20B.

The arrangement of the antenna device 20 for the wireless LAN on the upper surface 10A of the flat-panel display portion 10 allows radiation of radio waves far away, without being affected by the metal body placed around the display device 1. Conversely, where the antenna device 20 for the wireless LAN is arranged on the lower surface 10b of the flat-panel display portion 10, when the metal body is used in a pedestal (not shown) on which the flat-panel display portion 10 is mounted, the antenna device is susceptible to influence by the metal body. Moreover, if the antenna device 20 for the wireless LAN is arranged on one or both sides 10c, 10d of the flat-panel display portion 10, when the display device 1 is disposed in the vicinity of a wall on which the metal body is provided, the antenna device is susceptible to influence by the metal body. However, when the antenna device 20 for the wireless LAN is arranged on the upper surface 10a of the flat-panel display portion 10, such drawbacks will not occur.

The antenna device 20 comprises the multiple antennas 20A, 20B arranged side by side on the same straight line and arranged parallel to the linearly extending metal plate that is provided on the upper surface 10a of the flat-panel display portion 10. At a position of the metal plate 11 corresponding to each antenna 20A, 20B, an aperture 12A,12B is formed. Therefore, radio waves radiated from each of the multiple antennas 20A, 20B are radiated through each aperture 12A,12B formed in the metal plate 11 provided in the flat-panel display portion 10. This radiates radio waves to a remote location without being affected by the metal plate 11 provided on the flat-panel display portion 10. Further, the provision of the metal plate 11 on the upper surface 10a of the flat-panel display portion 10 mechanically strengthens the flat-panel display portion 10.

Furthermore, as shown in FIG. 1, the multiple antennas 20A,20B are arranged on the upper surface 10a of the flat-panel display portion 10 so that the radiation elements 22 face the apertures 12A,12B formed in the metal plate 11. For this reason, radio waves are smoothly radiated towards an access point through the apertures 12A,12B.

Moreover, as shown in FIG. 1, the multiple antennas 20A, 20B are arranged on the upper surface 10a of the flat-panel display portion 10 such that the radiation elements 22 are arranged on the same straight line with the metal plate 11. In other words, the multiple antennas 20A, 20B are each arranged so that each radiation element 22 thereof is positioned inside the apertures 12A,12B of the metal plate 11, as well as along the front edge in the depth direction of the upper surface 10a of the flat-panel display portion 10. For this reason, when radio waves are radiated from the radiation elements 22, 22 of both antennas 20A, 20B, the radio waves are radiated from the apertures 12A,12B, without being blocked by the metal plate 11, regardless of the size of a radiation angle α of the radio waves, thus significantly mitigating influence by the metal plate 11.

Since the multiple antennas 20A,20B are arranged so that the adjacent antennas 20A,20B are spaced apart by a predetermined distance , coupling due to the radio waves radiated from each antenna 20A, 20B may be attenuated, thereby attaining a high degree of isolation. This enables communication without degradation of signals from each antenna 20A, 20B. As shown in FIG. 9, the two antennas 20A, 20B are respectively connected to the wireless LAN module 40 installed inside the display device 1 by coaxial cables 30. In this way, the connection of the two antennas 20A, 20B to the wireless LAN module 40 through the coaxial cables 30 keeps the antennas 20A, 20B away from the wireless LAN module 40, thus mitigating significantly influence by noises induced from the wireless LAN module 40.

While the embodiment of the present invention is described, it is not limited thereto. The present invention may allow for various modifications and improvements. For example, the field to which the display device 1 is to be applied may be those with display devices such as a Personal Computer (PC) and a note book PC. Furthermore, the multiple antennas 20A, 20B need not always be arranged such that the radiation elements 22 are arranged on the same straight line with the metal plate 11. They may be arranged so as to be off the straight line on which the metal plate 11 is standing. For instance, as shown in FIG. 10A, the multiple antennas 20A, 20B may be arranged on the center, in the depth direction, of the flat-panel display portion 10 and spaced away from the the apertures 12A, 12B formed in the metal plate 11. Alternatively, as shown in FIG. 10B, they may be arranged on the rear end edge, in the depth direction, of the flat-panel display portion further away from the apertures 12A,12B formed in the metal plate 11.

In either case, as shown in FIG. 10A or FIG. 10B, it is preferable to set the width of the apertures 12A, 12B, so that the radio waves radiated from each antenna 12A, 12B are not influenced by the metal plate 11. Further, whereas in the instant embodiments, the antenna device 20 is composed of the two antennas 20A, 20B the antenna device 20 is not limited thereto. The antenna device 20 may be composed of three or more antennas. Furthermore, an aperture is formed in the metal plate 11 at each position corresponding to an antenna. In the case where the antenna device 20 is composed of three or more antennas, three or more corresponding apertures may be formed corresponding to the number of the antennas. Moreover, each antenna 20A, 20B is not necessarily limited to being an inverted F antenna, as long as they may be applied to a wireless LAN. While in the instant specification, the predetermined distance between the antennas is set to the distance for which the VSWR goes below -20dB, a value beyond this, and possibly below -10dB, may for example, be selected.

Key to main reference numerals in drawings:
1: display device
10: flat-panel display portion
10a: upper surface
11: metal plate
12A,12B: aperture
20: antenna device
20A,20B: antenna
21: ground plate
22: radiation element

## Claims

1. A display device (1) comprising:
a flat-panel display portion(10)on an upper surface (10a)of which a linearly extending metal plate(11)is provided; and
an antenna device (20) for a wireless LAN arranged on the upper surface (10a) of the flat-panel display portion (10),
wherein the antenna device (20) comprises multiple antennas (20A, 20B) arranged side-by-side on a straight line and arranged parallel to the metal plate (11), the multiple antennas (20A, 20B) being arranged so that a predetermined distance (D) between adjacent said antennas (20A, 20B) becomes the shortest, and
wherein plural apertures (12A, 12B) are formed at a position corresponding to each antenna (20A, 20B) of the metal plate (11).

2. The display device (1) according to claim 1, wherein each of the multiple antennas (20A, 20B) comprises a tab-like ground plate (21) and a tab-like radiation element (22) extending from an edge of the ground plate (21) , wherein each of the multiple antennas (20A, 20B) is arranged so that its radiation element (22) faces toward one said aperture (12A, 12B) formed in the metal plate(11).

3. The display device (1) according to claim 2, wherein the radiation elements (22) of the multiple antennas(20A, 20B) and the metal plate (11) are arranged on said straight line.
